(19) Europäisches Patentamt
European Patent Office
Office européen des brevets

(11) Veröffentlichungsnummer: **0 056 991**
**B1**

(12) **EUROPÄISCHE PATENTSCHRIFT**

(45) Veröffentlichungstag der Patentschrift: **27.03.85**

(51) Int. Cl.⁴: **C 09 B 67/46**, C 09 D 11/00, D 06 P 1/642

(21) Anmeldenummer: **82100444.7**

(22) Anmeldetag: **22.01.82**

(54) **Flüssige Farbstoffpräparate.**

(30) Priorität: **26.01.81 CH 473/81**

(43) Veröffentlichungstag der Anmeldung: **04.08.82 Patentblatt 82/31**

(45) Bekanntmachung des Hinweises auf die Patenterteilung: **27.03.85 Patentblatt 85/13**

(84) Benannte Vertragsstaaten: **BE CH DE FR GB IT LI NL**

(56) Entgegenhaltungen:
**FR - A - 2 372 875**
**FR - A - 2 374 387**
**FR - A - 2 388 029**
**FR - A - 2 410 027**

(73) Patentinhaber: **CIBA-GEIGY AG, Postfach, CH-4002 Basel (CH)**

(72) Erfinder: **Agarwal, Suresh C., Dr., Falkenstrasse 10, CH-4103 Bottmingen (CH)**
Erfinder: **Jäger, Horst, Dr., Wyhlenweg 10, CH-4126 Bettingen (CH)**
Erfinder: **Podder, Nitya Gopal, Dr., Sennenmattweg, CH-4202 Duggingen (CH)**
Erfinder: **Mollet, Hans, Dr., Mischelistrasse 75, CH-4153 Reinach (CH)**

(74) Vertreter: **Zumstein, Fritz sen., Dr. et al, Bräuhausstrasse 4, D-8000 München 2 (DE)**

**EP 0 056 991 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft flüssige Farbstoffpräparate von in Wasser unlöslichen oder schwerlöslichen Farbstoffen, ein Verfahren zu ihrer Herstellung sowie ihre Verwendung zum Färben oder Bedrucken von Textilmaterial.

Flüssige Farbstoffpräparate von in Wasser unlöslichen oder schwerlöslichen Farbstoffen sind bereits in großer Zahl bekannt (siehe z. B. DE-OS 2 850 482) und im Handel erhältlich. Sie bestehen im allgemeinen aus Wasser, Farbstoff, Dispergiermitteln, Frostschutz- und Feuchthaltemitteln sowie weiteren Zusätzen, wie z. B. Coupagemitteln, Antimicrobica oder Antischaummitteln. Als Frostschutz- und Feuchthaltemittel werden meistens Polyalkohole wie Glycerin, Sorbit, Ethylenglykol oder Propylenglykol verwendet.

Ferner sind aus der FR-A-2 388 029 wäßrige Präparate von wasserunlöslichen Farbstoffen bekannt, die u. a. Hilfsmittel zur Verbesserung der Redispergierbarkeit enthalten können, wie z. B. Aminosäuren, Komplexierungsmittel oder Polysaccharide.

Diese Präparate weisen jedoch oft eine ungenügende Redispergierbarkeit auf, d. h. Präparate, deren Wasseranteil teilweise oder völlig verdunstet ist, ergeben bei Zusatz dieses Wasseranteils keine einwandfreien Dispersionen. Es kommt zur Bildung von Farbstoffagglomeraten und/oder zur Kristallisation, und die Präparate lassen sich sich filtrieren, ohne daß ein Rückstand auf dem Filter verbleibt.

Der vorliegenden Erfindung lag die Aufgabe zugrunde, wäßrige Präparate von in Wasser unlöslichen oder schwerlöslichen Farbstoffen zu entwickeln, welche eine verbesserte Redispergierbarkeit aufweisen.

Diese Aufgabe wird durch die erfindungsgemäßen Präparate gelöst. Die Präparate sind sogar nach dem Eintrocknen bei 60°C noch einwandfrei redispergierbar. Wenn die verdunstete Menge Wasser wieder zugefügt wird, genügt es, die Anschlämmung einige Zeit zu rühren, um eine rückstandfrei filtrierbare Dispersion herzustellen. Aufwendige zusätzliche Mahlungen sind nicht erforderlich.

Gegenstand der vorliegenden Erfindung sind flüssige Farbstoffpräparate, enthaltend Wasser, einen in Wasser unlöslichen oder schwerlöslichen Farbstoff, ein Dispergiermittel, ein Feuchthaltemittel sowie gegebenenfalls weitere Zusätze, dadurch gekennzeichnet, daß sie als Feuchthaltemittel eine Verbindung der Formel I

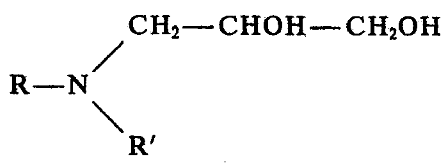

(I)

enthalten, wobei R eine gegebenenfalls durch OH, CN, Halogen oder $-N(Alkyl\ C_1-C_4)_2$ substituierte Alkylgruppe mit 1—16 C-Atomen und R' Wasserstoff oder die Gruppe

$$-CH_2-CHOH-CH_2OH$$

bedeutet.

Die Alkylgruppe R kann geradkettig, verzweigt oder cyclisch sein. Als Alkylgruppen kommen z. B. in Frage: Methyl, Ethyl, n-Propyl, Isopropyl, n-Butyl, Isobutyl, sec-Butyl, tert.-Butyl, n-Pentyl, Neopentyl, Octyl, Dodecyl, Tetradecyl, Hexadecyl, Cyclopentyl, Cyclohexyl oder Cycloheptyl.

Als durch OH, CN, Halogen wie Fluor, Chlor, Brom oder Jod oder auch durch $-N(Alkyl\ C_1-C_4)_2$ substituierte Alkylreste sind genannt: $\beta$-Hydroxyethyl, $\beta$-Cyanoethyl, Mono-, Di- oder Perfluorethyl, $\beta,\gamma$-Dichloropropyl, $\gamma$-Hydroxypropyl, $\beta$-(N,N-Diethylamino)-ethyl oder $\gamma$-(N,N-Dimethylamino)-propyl.

Besonders bewährt haben sich Feuchthaltemittel, in denen R ein unsubstituierter Alkylrest mit 1 bis 8, insbesondere 2 bis 4 C-Atomen ist und in denen R' die Gruppe

$$-CH_2-CHOH-CH_2OH$$

bedeutet.

Die erfindungsgemäßen Farbstoffpräparate bestehen vorzugsweise aus

| | |
|---|---|
| 15—60 Gew.-% | Farbstoff, |
| 20—60 Gew.-% | Wasser, |
| 10—50 Gew.-% | des definitionsgemäßen Feuchthaltemittels, |
| 0,5—10 Gew.-% | Dispergiermittel sowie |
| 0—20 Gew.-% | weiteren Zusätzen. |

Als in Wasser unlösliche oder schwerlösliche Farbstoffe kommen vor allem Dispersionsfarbstoffe und Küpenfarbstoffe in Betracht. Es handelt sich um Farbstoffe verschiedener Klassen, bei den Dispersionsfarbstoffen beispielsweise um Nitrofarbstoffe, Aminoketonfarbstoffe, Ketoniminfarbstoffe, Methinfarbstoffe, Nitrodiphenylaminfarbstoffe, Chinolinfarbstoffe, Aminonaphthochinonfarbstoffe, Cumarinfarbstoffe und insbesondere um Anthrachinonfarbstoffe und Azofarbstoffe, wie Monoazo- und Disazofarbstoffe.

Als Küpenfarbstoffe finden beispielsweise indigoide Farbstoffe, anthrachinoide Farbstoffe, wie z. B. Indanthren, sowie Schwefelfarbstoffe und Leukoküpenfarbstoffester Verwendung.

Unter Farbstoffen sollen auch optische Aufheller verstanden werden. Es kommen z. B. in Wasser unlösliche bis schwerlösliche Aufheller der folgenden Verbindungsklassen in Frage: Stilbene, Cumarine, Benzocumarine, Pyrene, Pyrazine, Pyrazoline, Oxazine, Mono- und Dibenzoxazolyl- oder -imidazolylverbindungen, Aryltriazol- und v-Triazol-Derivate sowie Naphtholsäureimide.

Im übrigen ist es auch möglich, Gemische gleicher oder verschiedener Farbstofftypen sowie optischer Aufheller im definitionsgemäßen Rahmen in den wäßrigen Präparaten einzusetzen.

Als Dispergiermittel werden vorzugsweise anionische und/oder nichtionische Dispergiermittel eingesetzt.

Als nichtionogene Dispergiermittel kommen beispielsweise in Frage:

Anlagerungsprodukte von z. B. 5 bis 500 Mol Alkylenoxiden, insbesondere Ethylenoxid, wobei einzelne Ethylenoxideinheiten durch substituierte Epoxide, wie Styroloxid und/oder Propylenoxid, ersetzt sein können, an höhere Fettsäuren oder an gesättigte oder ungesättigte Alkohole, Mercaptane oder Amine mit 8 bis 20 Kohlenstoffatomen oder an Alkylphenole oder Alkylthiophenole, deren Alkylreste mindestens 7 Kohlenstoffatome aufweisen;

Umsetzungsprodukte aus höhermolekularen Fettsäuren und Hydroxyalkylaminen. Diese lassen sich beispielsweise aus höhermolekularen Fettsäuren, vorzugsweise solchen mit etwa 8 bis 20 Kohlenstoffatomen, z. B. Caprylsäure, Stearinsäure, Ölsäure und insbesondere dem unter dem Sammelbegriff »Kokosölfettsäure« zusammengefaßten Säuregemisch, und Hydroxyalkylaminen, wie Triethanolamin oder vorzugsweise Diethanolamin, sowie Mischungen dieser Amine herstellen, wobei die Umsetzung so erfolgt, daß das molekulare Mengenverhältnis zwischen Hydroxyalkylamin und Fettsäure größer als 1, z. B. 2 : 1, ist. Derartige Verbindungen sind in der amerikanischen Patentschrift Nr. 2 089 212 beschrieben;

Phenolether, wie p-Nonylphenol verethert mit 9 Mol Ethylenoxid; Ricinolsäureester mit 15 Mol Ethylenoxid und Hydroabietylalkohol verethert mit 25 Mol Ethylenoxid.

Besonders vorteilhaft haben sich Fettalkoholpolyglykolether, besonders solche mit 20—100 Mol Ethylenoxid erwiesen, wie Stearyl-Oleylalkohol, verethert mit 80 Mol Ethylenoxid, und Oleylalkohol, verethert mit 20 bis 80 Mol Ethylenoxid, insbesondere jedoch Cetyl-Stearylalkohol, verethert mit 20 bis 30 Mol Ethylenoxid.

Ebenfalls bevorzugt sind Alkylenoxid-, insbesondere Ethylenoxid-Kondensationsprodukte, wobei einzelne Ethylenoxideinheiten durch substituierte Epoxide, wie Styroloxid und/oder vorzugsweise Propylenoxid, ersetzt sein können.

Besonders bevorzugt sind die Copolymerisate von Ethylenoxid und Propylenoxid der Formel

$$HO(CH_2-CH_2-O)_a-\left(\begin{matrix}CH-CH_2-O\\ |\\ CH_3\end{matrix}\right)_b-(CH_2-CH_2-O)_cH$$

worin die Summe von a und c eine Zahl zwischen 100 und 400 und b eine Zahl zwischen 30 und 80 bedeutet.

Diese nichtionogenen Dispergiermittel sollen vorteilhaft elektrolytarm sein. Gemische derartiger Mittel sind möglich.

Als anionaktive Dispergiermittel für die erfindungsgemäßen Präparate kommen die üblicherweise für Dispersions- oder Küpenfarbstoffe verwendeten anionischen Dispergiermittel in Betracht. Vorzugsweise werden folgende Verbindungen verwendet:

a) Ligninsulfonate, z. B. solche, die nach dem Sulfit- oder Kraft-Verfahren gewonnen werden. Vorzugsweise handelt es sich um Produkte, die z. T. hydrolysiert, oxidiert oder desulfoniert und nach bekannten Verfahren fraktioniert wurden, z. B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht zwischen 1000 und 80 000, einem Gehalt an aktivem Ligninsulfonat von mindestens 80% und vorzugsweise mit niedrigem Gehalt an mehrwertigen Kationen. Der Sulfonierungsgrad kann in weiten Grenzen variieren. Das Verhältnis von Kohlenstoff zu organisch gebundenem Schwefel liegt beispielsweise zwischen 9 : 1 und 55 : 1;
b) Kondensationsprodukte von aromatischen Sulfonsäuren mit Formaldehyd, wie Kondensationsprodukte aus Formaldehyd und Naphthalinsulfonsäuren oder aus Formaldehyd, Naphthalinsulfonsäure und Benzolsulfonsäure oder ein Kondensationsprodukt aus Rohkresol, Formaldehyd und Naphthalinsulfonsäure;
c) Dialkylsulfosuccinate, deren Alkylgruppen 3—8 Kohlenstoffatome aufweisen, wie z. B. Di-propylsulfosuccinat, Di-iso-butylsulfosuccinat, Di-heptylsulfosuccinat, vorzugsweise jedoch Di-hexylsulfosuccinat und Di-amylsulfosuccinat;

d) sulfatierte oder sulfonierte Fettsäuren oder Fettsäureester von Fettsäuren mit 10 bis 22, vorzugsweise 12—18 Kohlenstoffatomen, wie z. B. sulfatierte Ölsäure, Elaidinsäure oder Ricinolsäure bzw. deren niedere Alkylester, z. B. Ethyl-, Propyl- oder Butylester. Sehr gut geeignet sind auch die sulfatierten oder sulfonierten Öle, welche solche Fettsäuren enthalten, wie z. B. Olivenöl und vor allem Ricinusöl.

Diese anionischen Dispergiermittel werden vorzugsweise in Form der Ammonium- oder vor allem Alkalisalze, wie Lithium-, Kalium- oder insbesondere Natriumsalze eingesetzt.

Falls gewünscht können den Farbstoffpräparaten weitere eigenschaftsverbessernde Zusätze beigegeben werden, wie z. B. Coupagemittel, wie Dextrin oder Sorbit, hydrotrope Mittel, wie Harnstoff oder Formamid; Antimicrobica; Fungicide, z. B. wäßrige Formalinlösung; Antischaummittel und viskositätsverbessernde Mittel, z. B. Polysaccaride.

Als besonders gut redispergierbar haben sich die Farbstoffpräparate erwiesen, welche 15—60 Gew.-%, vorzugsweise 35—50 Gew.-% Farbstoff, 20—60 Gew.-% Wasser, 10—50 Gew.-%, vorzugsweise 15—30 Gew.-% des definitionsgemäßen Feuchthaltemittels, 0,1—5 Gew.-% eines anionaktiven Dispergiermittels, 0,5—5 Gew.-% eines nichtionogenen Copolymerisates von Ethylenoxid mit einem weiteren Olefinoxid mit mindestens 65 Gew.-% Ethylenoxidanteil und einem Molekulargewicht über 12 000 sowie gegebenenfalls weitere Zusätze enthalten. Ferner sind solche Präparate besonders gut redispergierbar, welche 15—60 Gew.-%, vorzugsweise 35—50 Gew.-% Farbstoff, 20—60 Gew.-% Wasser, 10—50 Gew.-%, vorzugsweise 15—30 Gew.-% des definitionsgemäßen Feuchthaltemittels, 0,5—5 Gew.-%, vorzugsweise 1—4 Gew.-% eines nicht-ionischen Dispergiermittels und 0,5—5 Gew.-%, vorzugsweise 1—3 Gew.-% eines anionischen Dispergiermittels, ausgewählt aus der Gruppe der

a) Dialkylsulfosuccinate, deren Alkylgruppen je 3—8 Kohlenstoffatome aufweisen, oder der
b) sulfatierten oder sulfonierten Fettsäuren oder Fettsäureester von Fettsäuren mit 10 bis 22 Kohlenstoffatomen, wobei anionische Dispergiermittel aus der Gruppe a) bevorzugt sind,

sowie gegebenenfalls weitere Zusätze enthalten.

Die Herstellung der neuen wäßrigen Farbstoffpräparate erfolgt beispielsweise dadurch, daß man den definitionsgemäßen Farbstoff in Wasser mit mindestens einem Dispergiermittel vermischt und vermahlt, was z. B. in einer Kugelmühle oder Sandmühle erfolgt, und die restlichen Komponenten vor, während oder auch erst nach dem Mahlprozeß zugibt.

Da die erfindungsgemäßen Präparate elektrolytarm sind, können auch elektrolytempfindliche Verdicker zur Herstellung von Druckpasten verwendet werden. Als besonders wertvoll haben sich in diesem Zusammenhang vor allem Verdicker auf Polyacrylbasis bewährt. Daneben eignen sich aber auch natürliche Verdicker zur Herstellung von Druckpasten unter Verwendung der erfindungsgemäßen Präparate.

Die neuen Farbstoffpräparate sind dünnflüssige Dispersionen, die dispergiermittelarm, elektrolytarm, feindispers, dispersionsstabil, d. h. nicht aggregierend und hochkonzentriert an Farbstoff sowie gut redispergierbar sind. Sie bleiben sowohl bei längerer Lagerung bei 25° bis 30°C als auch nach mehrwöchiger Lagerung bei 60°C stabil, d. h. niedrigviskos und einwandfrei filtrierbar und verändern ihre Viskosität nur unwesentlich. Bei der Lagerung bleibt die Feinverteilung der Farbstoffe praktisch unverändert. Die neuen Präparate sind stippenfrei verteilbar in Textildruckfarben mit allen konventionellen Verdickungen. Falls Reste der flüssigen Farbstoffpräparate am Rand oder Deckel der Gebinde, z. B. Fässer, eintrocknen, lassen sich diese Rückstände überraschenderweise wieder vollständig redispergieren ohne daß größere Farbstoffagglomerate zurückbleiben.

Die neuen wäßrigen Farbstoffpräparate finden Verwendung zur Herstellung von wäßrigen oder wäßrig-organischen Färbeflotten oder Drucktinten oder solchen auf Basis einer Wasser-in-Öl Emulsion, ferner zur Herstellung von Druckpasten enthaltend natürliche oder synthetische Verdicker.

Enthalten die Druckpasten oder Färbeflotten erfindungsgemäße Präparate mit Küpenfarbstoffen, so finden sie Verwendung zum Färben oder Bedrucken von Cellulosematerial, insbesondere von Baumwolle.

Die Drucktinten, Druckpasten oder Färbeflotten, welche erfindungsgemäße Präparate mit Dispersionsfarbstoffen enthalten, sind geeignet zum Färben oder Bedrucken von organischem Material, insbesondere synthetischen Textilmaterialien nach kontinuierlicher oder diskontinuierlicher Verfahrensweise, wie z. B. solchen aus Cellulosetriacetat, synthetischen Polyamiden und insbesondere Polyester. Die Färbungen können durch Färbe-, Klotz- oder Druckverfahren erhalten werden. Dabei werden die üblicherweise beim Aufbringen von Dispersionsfarbstoffen auf synthetisches Material eingesetzten Zusätze verwendet. Die Materialien können in den verschiedensten Verarbeitungsstadien vorliegen.

Die erfindungsgemäßen Farbstoffpräparate, welche transferierbare Farbstoffe enthalten, können auch zum Bedrucken von flächenförmigen Gebilden nach dem Transferdruckprinzip verwendet werden.

Enthalten die neuen Präparate optische Aufheller, so finden sie Verwendung zum optischen Aufhellen von Textilmaterialien nach z. B. dem Ausziehverfahren, Hochtemperaturausziehverfahren und Foulardtherm-Verfahren. Gegebenenfalls können zur Stabilisierung der Flotte und/oder zur Erzielung von Carrier-Effekten weitere geeignete Dispergatoren oder andere Hilfsmittel zugesetzt werden.

Die folgenden Beispiele erläutern die Erfindung, ohne sie darauf zu beschränken. Teile bedeuten Gewichtsteile und Prozente Gewichtsprozente. Die Temperaturen sind in Grad Celsius angegeben.

Beispiel 1

45,4 g des Farbstoffes der Formel

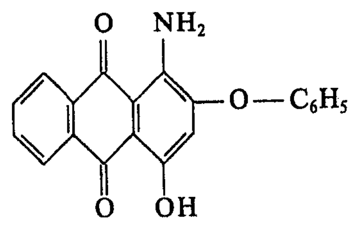

werden mit 2 g eines Blockpolymers aus 20% Propylenoxid und 80% Ethylenoxid (MG ca. 16 500), 0,1 g eines Ligninsulfonats, 18,5 g Wasser und 10 g des Feuchthaltemittels der Formel

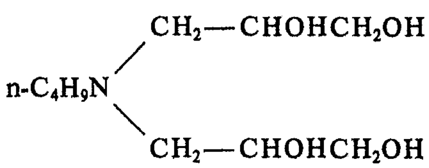

in einer Mühle mit 180 g Glasperlen mit einem Durchmesser von 1 mm während 24 Stunden gemahlen bis die Teilchengröße der Partikel ca. 1 µm beträgt. Anschließend werden noch 3 g des Blockpolymers, 10 g des Feuchthaltemittels, 10 g Wasser und 0,7 g Formalin zugegeben und die erhaltene feine Dispersion wird von den Perlen abgetrennt. Dieses Präparat ist insbesondere für den Transferdruck geeignet und ergibt hier z. B. auf Polyestergewebe farbstarke Drucke.

Redispergierbarkeitstest

1 g der oben erhaltenen Dispersion wird in einem 250-ml-Becherglas mit einem Bodendurchmesser von 6,5 cm abgewogen und die Dispersion auf dem Glasboden verteilt. Das Becherglas wird 72 Std. bei 24—27° und 40—50% relativer Feuchtigkeit im Labor offen stehengelassen. Anschließend werden 100 ml Wasser ins Becherglas gegossen, 3 Minuten mit einem Magnetstab gerührt und die entstandene Dispersion durch ein Schleicher-Schüll Filterpapier SS 597 unter Vakuum filtriert. Die Filterzeit der Dispersion beträgt 5—8 Sekunden, und es bleibt kein Rückstand auf dem Filterpapier. Die Redispergierbarkeit des Produktes ist also gut.

Vergleichsbeispiel

Arbeitet man wie im Beispiel 1 beschrieben, ersetzt jedoch das dort verwendete Feuchthaltemittel durch die gleiche Menge Propylenglykol und führt den im Beispiel 1 aufgeführten Redispergierbarkeitstest durch, so läßt sich die Formulierung nach der Trocknung nicht mehr redispergieren. Die entstandene Dispersion ist unfiltrierbar.

Beispiel 2

45,4 g des im Beispiel 1 aufgeführten Farbstoffes werden mit 19,5 g Wasser, 20 g des im Beispiel 1 genannten Feuchthaltemittels, 3 g Blockpolymeren gemäß Beispiel 1 und 1,25 g Na-Di-hexylsulfosuccinat (80%ige alkoholische Lösung) wie im Beispiel 1 beschrieben fein gemahlen (Teilchengröße ca. 1 µm). Nach Zugabe von 10 g Wasser wird die Dispersion von den Perlen abgetrennt. Mit 1 g dieser Dispersion wird der Redispergierbarkeitstest (gemäß Beispiel 1) durchgeführt. Nach der Trocknung ist die Formulierung einwandfrei redispergierbar, d. h. sie läßt sich ohne Rückstand filtrieren. Dieses Präparat ist insbesondere für den Transferdruck geeignet und ergibt hier z. B. auf Polyestergewebe farbstarke Drucke.

Vergleichsbeispiel

Arbeitet man wie im Beispiel 2 beschrieben, ersetzt jedoch das dort verwendete Feuchthaltemittel durch die gleiche Menge Propylenglykol und führt den im Beispiel 1 aufgeführten Redispergierbarkeitstest durch, so läßt sich die Formulierung nach der Trocknung nicht mehr redispergieren. Die entstandene Dispersion ist unfiltrierbar.

Beispiel 3

43,3 g des Farbstoffes der Formel

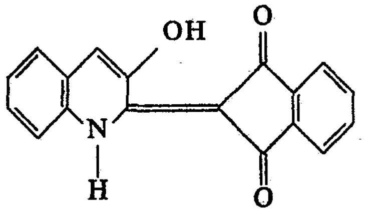

werden mit 21 g Wasser, 20 g des Feuchthaltemittels aus Beispiel 1, 3,5 g eines Blockpolymeren aus 20% Propylenoxid und 80% Ethylenoxid (MG ca. 16 500) und 1,25 g Na-Dihexylsulfosuccinat (80%ige alkoholische Lösung) während 24 Stunden in einer Perlmühle fein gemahlen. Nach Zugabe von 10 g Wasser und 0,7 g Formalin wird die Dispersion von den Perlen abgetrennt.

Dieses Präparat ist insbesondere für den Transferdruck geeignet und ergibt hier z. B. auf Polyestergewebe farbstarke Drucke.

1 g dieses Präparates wird in einem 250-ml-Becherglas (Bodendurchmesser 6,5 cm) abgewogen und auf dem Boden verteilt. Das Becherglas wird 24 Stunden bei 60° und 50% relativer Feuchtigkeit offen stehengelassen. Nach Zugabe von 100 ml Wasser zur Restmasse wird 3 Minuten gerührt und die entstandene Suspension durch ein Schleicher-Schüll Filterpapier SS 597 filtriert. Die Filterzeit beträgt ca. 10 Sekunden und es bleibt kein Rückstand auf dem Filterpapier.

Beispiel 4

45 g des Farbstoffes der Formel

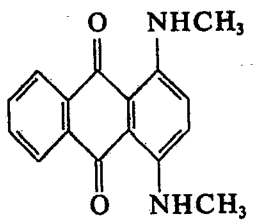

werden mit 20,4 g Wasser, 3,5 g Blockpolymeren gemäß Beispiel 1, 1 g Natriumdiamylsulfosuccinat und 10 g des Feuchthaltemittels gemäß Beispiel 1 in einer Perlmühle bis auf eine Teilchengröße von 1 µm gemahlen. Nach ca. 24 Stunden werden 10 g Wasser und 10 g Feuchthaltemittel noch hinzugegeben und die Farbstoff-Formulierung von den Perlen abgetrennt.

Dieses Präparat ist insbesondere für den Transferdruck geeignet und ergibt hier z. B. auf Polyestergewebe farbstarke Drucke.

1 g dieser Formulierung wird in einem Becherglas abgewogen und 72 Stunden bei 20—26° offen stehengelassen. Die im Becherglas zurückgebliebene Masse wird mit 100 ml Wasser durch 3minütiges Rühren wieder dispergiert und filtriert. Es bleibt kein Rückstand auf dem Filterpapier. Die Redispergierbarkeit des Produktes ist also sehr gut.

Beispiel 5

39 g des Farbstoffes der Formel

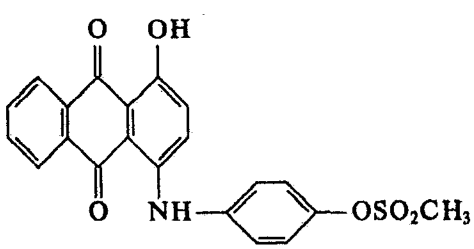

in Form von 67,3 g Preßkuchen (Trockengehalt 58%) werden mit weiteren 8,9 g Wasser, 1,6 g Ligninsulfonat, 3 g Blockpolymeren gemäß Beispiel 1, 0,2 g Chloracetamid, 0,7 g Formalin und 0,3 g eines Antischaummittels während 24 Stunden mit Glasperlen fein gemahlen. Nach Zugabe von 18 g des im Beispiel 1 genannten Feuchthaltemittels wird das Präparat von den Glasperlen abgetrennt.

Dieses Präparat ist insbesondere für den Direktdruck geeignet und er gibt hier z. B. auf Polyestergewebe einen farbstarken, sprickelfreien Druck.

Mit 1 g dieses Präparates wird der Redispergierbarkeitstest gemäß Beispiel 1 durchgeführt. Das Präparat wird während 4 Tagen bei 21—22° offen stehengelassen. Die Redispergierbarkeit ist gut.

Verwendet man anstelle des oben eingesetzten Feuchthaltemittels gleiche Mengen Propylenglykol oder Ethylenglykol, dann ist die Redispergierbarkeit sehr schlecht.

Beispiel 6

45 g des im Beispiel 1 aufgeführten Farbstoffes werden mit 20 g Wasser, 20 g des Feuchthaltemittels aus Beispiel 1, 3 g Blockpolymeren gemäß Beispiel 1 und 1 g Na-Dihexylsulfosuccinat in einer Mühle fein gemahlen (Teilchendurchmesser $<3\ \mu m$). Man erhält ein Farbstoffpräparat, das eine gute Redispergierbarkeit zeigt.

Dieses Präparat ist insbesondere für den Transferdruck geeignet und ergibt hier z. B. auf Polyestergewebe farbstarke Drucke.

Beispiel 7

Arbeitet man wie im Beispiel 1 beschrieben, verwendet jedoch anstelle des dort eingesetzten Feuchthaltemittels dasjenige der Formel

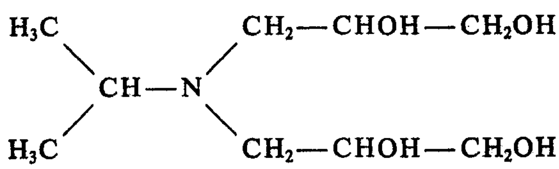

so erhält man ebenfalls ein gut redispergierbares Farbstoffpräparat. Dieses Präparat ist insbesondere für den Transferdruck geeignet und ergibt hier z. B. auf Polyestergewebe farbstarke Drucke.

Beispiel 8

38,4 g Farbstoff der Formel

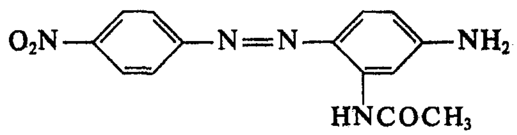

werden mit 32,2 g Wasser, 0,1 g eines Ligninsulfonats, 3 g eines Blockpolymeren gemäß Beispiel 1 und 20 g des Feuchthaltemittels aus Beispiel 7 in einer Sandmühle zerkleinert bis die Teilchengröße ca. 1 $\mu m$ beträgt. Mit 1 g dieser Formulierung wird die Redispergierbarkeit gemäß Beispiel 1 untersucht. Die Formulierung zeigt eine einwandfreie Redispergierbarkeit.

Dieses Präparat ist insbesondere für den Transferdruck geeignet und ergibt hier z. B. auf Polyestergewebe farbstarke Drucke.

Beispiel 9

48,3 g Farbstoff der Formel

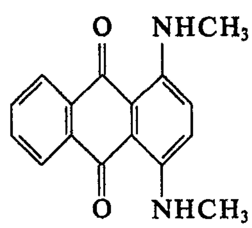

wird mit 25,3 g Wasser, 12 g Harnstoff, 2 g eines nicht-ionogenen Dispergators (Kondensationspro-

dukt eines $C_{16}-C_{18}$-n-Alkanols mit ca. 25 Mol-Einheiten Ethylenoxid), 1,4 g eines anionischen Dispergators (Kondensationsprodukt aus Formaldehyd und Naphthalinsulfonsäure) und 20 g des Feuchthaltemittels aus Beispiel 7 in einer Sandmühle bis auf eine Teilchengröße von ca. 1 µm gemahlen. Die Redispergierbarkeit des Produktes ist sehr gut.

Dieses Präparat ist insbesondere für den Transferdruck geeignet und ergibt hier z. B. auf Polyestergewebe farbstarke Drucke.

## Beispiel 10

311,8 g Farbstoffpreßkuchen, enthaltend 164 g Farbstoff (trocken) der Formel

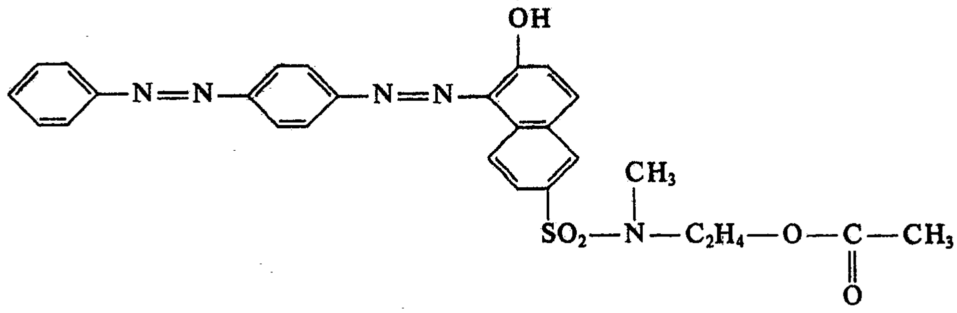

werden mit 10 g eines Blockpolymeren gemäß Beispiel 1, 7,5 g eines Ligninsulfonats, 1,0 g eines Antischaummittels, 18,2 g Wasser und 105 g des Feuchthaltemittels aus Beispiel 1 in einer Naßmühle mit 1250 g Zirbeads vom Durchmesser 0,8—1,7 mm während 35 Stunden dispergiert und gemahlen, bis die Teilchengröße unter 3 µm liegt. Anschließend werden noch 5,0 g des Blockpolymers, 1,0 g Chloracetamid, 4,0 g Formaldehyd und 37,5 g Wasser zugegeben. Es wird noch 1 Stunde nachgemahlen, und darauf die feine Dispersion von den Mahlkörpern abgetrennt.

Dieses hochkonzentrierte, feindisperse und dispergatorarme Präparat eignet sich zur Herstellung von Druckpasten unter Verwendung von natürlichen und synthetischen Verdickungsmitteln. Derartige Druckpasten sind geeignet für den Direktdruck auf Polyester-Materialien.

Das Präparat ist vollkommen redispergierbar, falls es einmal in offenen Gebinden oder Behältern eintrocknen sollte. Diese mit bisher üblichen Feuchthaltemitteln nicht erreichte Eigenschaft kann auf folgende Weise gezeigt und mit Präparaten bekannter Art, d. h. solchen mit üblichen Feuchthaltemitteln, verglichen werden:

Das zu prüfende Präparat wird in einer Petrischale im Trockenschrank während 65 Stunden bei 40°C zur Trockne eingedampft. Der trockene Rückstand wird mit einer Druckverdickung aus natürlichen oder synthetischen Verdickungsmitteln im gewünschten Verhältnis vermischt. Diese Druckpaste wird in eine offene Filmdruckschablone (Gaze 12) gegeben, und damit Polyester-Twill bedruckt. Die Drucke werden getrocknet, und bei 170°C während 8 Minuten im Mathis-Dämpfer unter HT-Bedingungen fixiert. Große Farbstoffagglomerate, d. h. nicht dispergierter Farbstoff, werden auf diese Weise deutlich als sog. Sprickel sichtbar.

Während bei einem Präparat mit Propylenglycol als Feuchthaltemittel ein Druck mit vielen großen Sprickeln, z. T. sogar Schlieren resultiert, ergeben die erfindungsgemäßen Präparate einen absolut sprickelfreien Druck.

## Beispiel 11

400 g entsalzter und getrockneter Farbstoff der Konstitution

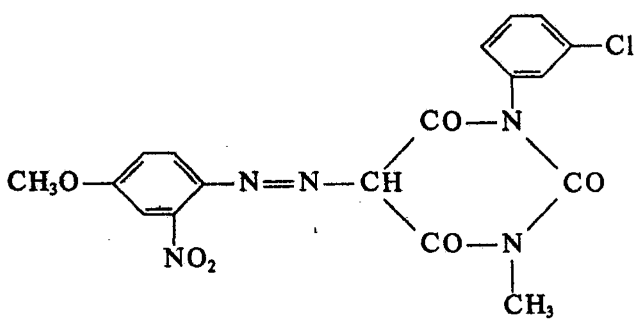

werden mit 10 g eines Blockpolymers aus 20% Propylenoxid und 80% Ethylenoxid (MG 16 500), 15 g

eines Ligninsulfonates, 5 g eines Antischaummittels, 300 g Wasser und 170 g des in Beispiel 1 genannten Feuchthaltemittels in einer Kugelmühle mit 2000 g Zirbeads-Mahlkörpern vom Durchmesser 0,8—1,7 mm während 10 Stunden einer Naßmahlung unterworfen, bis alle Farbstoffpartikel in einer Größe unter 3 µm vorliegen. Zu dieser Dispersion werden weitere 20 g Blockpolymer, ferner 2 g Chloracetamid, 7 g Formaldehyd und 71 g Wasser zugefügt und gut homogenisiert. Nach Abtrennung der Mahlkörper erhält man eine feine, dünnflüssige Dispersion.

Dieses Präparat ist insbesondere für den Direktdruck geeignet und ergibt hier z. B. auf Polyestergewebe einen farbstarken, sprickelfreien Druck.

Das Präparat zeigt nach Eintrocknung im Redispergierbarkeitstest das gleiche Verhalten wie das im Beispiel 10 beschriebene Präparat: keine Sprickel auf Polyester-Material; dagegen erhält man mit einem Präparat, das als Feuchthaltemittel Propylenglykol enthält, einen Druck mit vielen Sprickeln.

Beispiel 12

80,4 g salzfreier, getrockneter Farbstoff der Konstitution

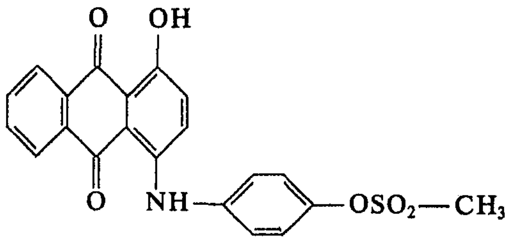

werden in einer Lösung von 52,0 g Wasser, 36,0 g Feuchthaltemittel gemäß Beispiel 1, 3,2 g Ligninsulfonat, 0,6 g Antischaummittel und 6,0 g eines Blockpolymeren aus 20% Propylenoxid und 80% Ethylenoxid (MG ca. 16 500) suspendiert, und darauf einer Naßmahlung wie in den vorangegangenen Beispielen unterworfen. Nach 16 Stunden ist eine Partikelfeinheit unter 2 µm erreicht. Nach Zugabe von 0,4 g Chloracetamid, 1,4 g Formaldehyd und 20,0 g Wasser wird die Dispersion noch 5 Min. gemahlen und hernach durch ein Nylon-Sieb abgetrennt.

Die Formulierung zeigt nach Eintrocknen eine einwandfreie Redispergierbarkeit.

Dieses Präparat ist insbesondere für den Direktdruck geeignet und ergibt hier z. B. auf Polyestergewebe einen farbstarken, sprickelfreien Druck.

Beispiel 13

Zu einer Lösung von 49,5 g Wasser, 6,0 g Ligninsulfonat, 1,5 g Antischaummittel und 67,5 g Feuchthaltemittel gemäß Beispiel 1 werden 134,0 g Filterkuchen, enthaltend 79 g eines Farbstoffgemisches, bestehend aus Farbstoffen der Formel

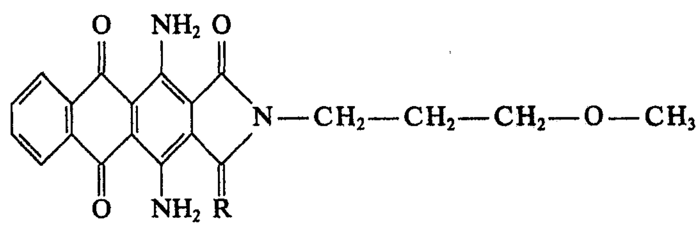

wobei der Rest R Sauerstoff oder NH bedeutet, eingetragen und homogenisiert; anschließend noch 9,0 g eines Blockpolymers gemäß Beispiel 1. Diese Suspension wird während 18 Stunden mit 300 g Glasperlen von 1 mm ∅ in einer Naßmühle dispergiert und gemahlen bis die Teilchengröße unter 2 µm liegt. Nach Erreichung dieser Dispersität werden noch 0,6 g Chloracetamid, 2,1 g Formaldehyd und 30,0 g Wasser zugegeben. Nach guter Homogenisierung werden die Mahlkörper abgetrennt.

Das Präparat ist nach dem Eintrocknen gut redispergierbar. Dieses Präparat ist insbesondere für den Direktdruck geeignet und ergibt hier z. B. auf Polyestergewebe einen farbstarken, sprickelfreien Druck.

Beispiel 14

20 g des optischen Aufhellers der Konstitution

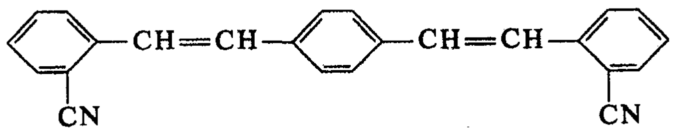

werden als Pulver mit 20 g Feuchthaltemittel gemäß Beispiel 1, 57 g Wasser und 3,0 g eines Blockpolymers gemäß Beispiel 1 zu einem Slurry verarbeitet, und dieser in einer Dyno-Mühle mit Glasperlen während 7 Stunden dispergiert und gemahlen, bis alle Partikel des Aufhellers einen Durchmesser von unter 3 µm aufweisen. Nach Abtrennung der Mahlkörper erhält man ein Aufhellerpräparat, das für die optische Aufhellung von Polyester-Fasern im HT-Ausziehverfahren oder im Foulard-Therm-Verfahren geeignet ist. Im Gegensatz zu analogen Formulierungen, die jedoch anstelle des im Beispiel 1 genannten Feuchthaltemittels übliche Feuchthaltemittel wie Propylenglykol oder Ethylenglykol enthalten, läßt sich obige Formulierung nach Eintrocknung mit Wasser wieder vollständig dispergieren, d. h. in die ursprünglich vorhandene Dispersität mit einer max. Teilchengröße von 3 µm bringen. Die Präparate mit Propylenglykol bzw. Ethylenglykol dagegen sind nach Eintrocknung irreversibel agglomeriert, was bei deren Verwendung zu starker Verminderung des Aufhellungseffektes führt.

### Beispiel 15

46 g des getrockneten Farbstoffes der Formel

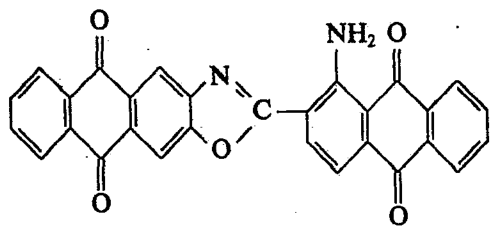

werden in eine Lösung von 3,5 g eines anionaktiven Dispergiermittels (Kondensationsprodukt von Formaldehyd mit dem Na-Salz der Naphthalinsulfosäure), 38 g des Na-Salzes von Polyacrylsäure (MG 8000), 2 g einer 30%igen Formaldehyd-Lösung, 10 g Betainbase-Monohydrat, 0,4 g Xanthan Gummi (MG >1 Million), 36 g Feuchthaltemittel gemäß Beispiel 1 und 64,1 g Wasser eingetragen und homogenisiert. Diese Suspension wird in einer Naßmühle mit 400 g Siliquarzitkügelchen (3 mm ∅) während 8 Stunden dispergiert und auf eine Teilchengröße von max. 1 µm gemahlen. Das nach Abtrennung der Mahlkörper erhaltene flüssige feindisperse Küpen-Präparat eignet sich für die Pad-Steam-Färbung von Cellulose. Es weist eine gute Lagerstabilität auf, und läßt sich nach Eintrocknung leicht wieder mit Wasser in die ursprünglich vorliegende Dispersität von max. 1 µm bringen.

### Beispiel 16

40,5 g des Farbstoffes der Formel

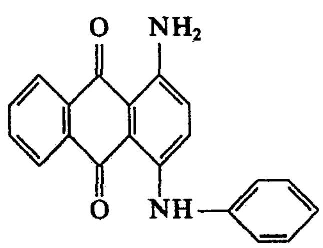

werden mit 23,95 g Wasser, 20 g des Feuchthaltemittels aus Beispiel 1, 4,0 g eines Blockpolymeren aus Propylenoxid und Ethylenoxid, gemäß Beispiel 1 1,25 g Na-Dihexylsulfosuccinat (80%ige alkoholische Lösung) und 0,3 g Chloracetamid während 24 Stunden in einer Perlmühle fein gemahlen. Nach Zugabe von 10 g Wasser wird die Dispersion von den Perlen abgetrennt. Das Präparat hinterläßt im Redispergierbarkeitstest gemäß Beispiel 3 keinen Rückstand auf dem Filterpapier.

Dieses Präparat ist insbesondere für den Transferdruck geeignet und ergibt hier z. B. auf Polyestergewebe farbstarke Drucke.

### Vergleichsbeispiel

Arbeitet man wie im Beispiel 16 beschrieben, ersetzt jedoch das dort verwendete Feuchthaltemittel durch die gleiche Menge Propylenglykol und führt den im Beispiel 16 aufgeführten Redispergierbarkeitstest durch, so läßt sich die Formulierung nach dem Eintrocknen nicht mehr gut redispergieren und hinterläßt im Filtertest viele Sprickel auf dem Filterpapier.

Beispiel 17

6,5 g des Farbstoffes der Formel

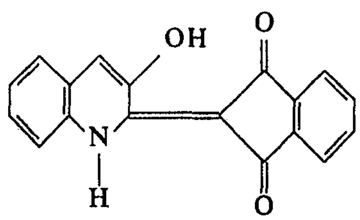

15,5 g des Farbstoffes der Formel

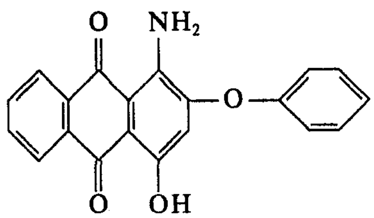

9,1 g des Farbstoffes der Formel

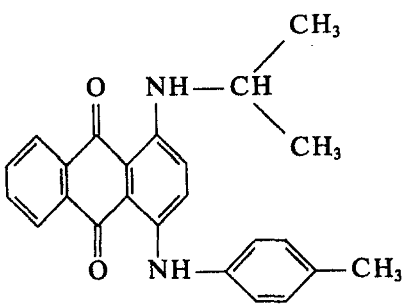

und 7,2 g des Farbstoffes der Formel

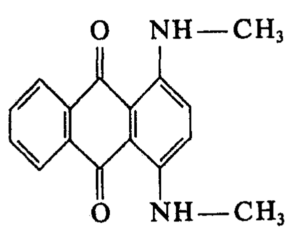

werden mit 4,8 g eines Blockpolymeren aus Propylenoxid und Ethylenoxid, gemäß Beispiel 1, 0,1 g eines Ligninsulfonats, 19,3 g des im Beispiel 1 genannten Feuchthaltemittels, 0,4 g eines Cyclohexanon-Formaldehydkondensationsproduktes, 0,7 g Formalin, 0,3 g Chloracetamid und 26 g Wasser während 24 Stunden in einer Perlmühle fein gemahlen. Nach Zugabe von 10 g Wasser wird die so erhaltene feine Dispersion von den Perlen abgetrennt. Diese, insbesondere für den Transferdruck geeignete Formulierung, ist lagerstabil und nach dem Eintrocknen gut redispergierbar.

Verwendet man anstelle des im Beipiel 1 genannten Feuchthaltemittels die gleiche Menge an Propylenglykol, so erhält man eine Formulierung mit ebenfalls sehr guter Lagerstabilität, die sich jedoch nach dem Eintrocknen nicht mehr gut redispergieren läßt.

Beispiel 18

38,6 g des Farbstoffes der Formel

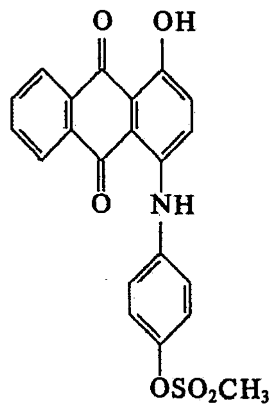

werden mit 3 g eines Blockpolymeres aus Propylenoxid und Ethylenoxid gemäß Beispiel 1, 1,6 g eines Ligninsulfonates, 20,5 g Wasser und jeweils 36,0 g des Feuchthaltemittels (50%ig) der Formel

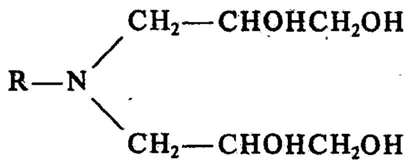

R— kann sein:

a) $CH_3-(CH_2)_2-$

b) 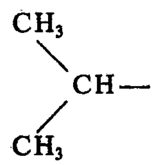

c) $HO-CH_2-CH_2-$

d) $CH_3-CH_2-$

in einer Mühle mit 200 g Glasperlen mit einem Durchmesser von 1 mm während 18 Stunden gemahlen, bis die Teilchengröße der Partikel ca. 1—4 µm beträgt. Anschließend wird noch 0,3 g Chloracetamid zugegeben und noch 1 Stunde gemahlen. Dann wird die feine Dispersion von den Glasperlen abgetrennt.

Dieses Präparat ist insbesondere für den Direktdruck geeignet und ergibt hier z. B. auf Polyestergewebe einen farbstarken, sprickelfreien Druck.

Der Redispergierbarkeitstest wird wie im Beispiel 3 beschrieben durchgeführt. Jedes der Präparate, enthaltend eines der Feuchthaltemittel a) bis d) zeigt eine gute Redispergierbarkeit.

**Patentansprüche**

1. Flüssige Präparate von Farbstoffen bzw. optischen Aufhellern, enthaltend Wasser, einen in Wasser unlöslichen oder schwerlöslichen Farbstoff oder optischen Aufheller, ein Dispergiermittel, ein Feuchthaltemittel sowie gegebenenfalls weitere Zusätze, dadurch gekennzeichnet, daß sie als Feuchthaltemittel eine Verbindung der Formel I

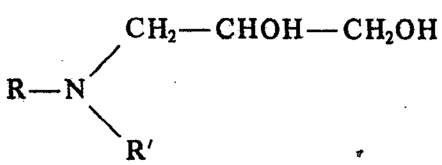

(I)

enthalten, wobei R eine gegebenenfalls durch OH, CN, Halogen oder $-N(Alkyl\text{-}C_1-C_4)_2$ substituierte Alkylgruppe mit 1—16 C-Atomen und R' Wasserstoff oder die Gruppe

$-CH_2-CHOH-CH_2OH$

bedeutet.

2. Farbstoffpräparate gemäß Anspruch 1, dadurch gekennzeichnet, daß sie als Feuchthaltemittel

eine Verbindung der Formel I enthalten, wobei R eine unsubstituierte Alkylgruppe mit 1—8, vorzugsweise 2—4 C-Atomen bedeutet und R′ die Gruppe

$$-CH_2-CHOH-CH_2-OH$$

darstellt.

3. Farbstoffpräparate gemäß Anspruch 1, dadurch gekennzeichnet, daß sie aus

15—60 Gew.-% Farbstoff,
20—60 Gew.-% Wasser,
10—50 Gew.-% des definitionsgemäßen Feuchthaltemittels,
0,5—10 Gew.-% Dispergiermittel sowie
0—20 Gew.-% weiteren Zusätzen

bestehen.

4. Farbstoffpräparate gemäß Anspruch 3, dadurch gekennzeichnet, daß sie 15—60 Gew.-%, vorzugsweise 35—50 Gew.-% Farbstoff, 20—60 Gew.-% Wasser, 10—50 Gew.-%, vorzugsweise 15—30 Gew.-% des definitionsgemäßen Feuchthaltemittels, 0,1—5 Gew.-% eines anionaktiven Dispergiermittels, 0,5—5 Gew.-% eines nichtionogenen Copolymerisates von Ethylenoxid mit einem weiteren Olefinoxid mit mindestens 65 Gew.-% Ethylenoxidanteil und einem Molekulargewicht über 12 000 sowie gegebenenfalls weitere Zusätze enthalten.

5. Farbstoffpräparate gemäß Anspruch 3, dadurch gekennzeichnet, daß sie 15—60 Gew.-%, vorzugsweise 35—50 Gew.-% Farbstoff, 20—60 Gew.-% Wasser, 10—50 Gew.-%, vorzugsweise 15—30 Gew.-% des definitionsgemäßen Feuchthaltemittels, 0,5—5 Gew.-%, vorzugsweise 1—4 Gew.-% eines nichtionischen Dispergiermittels und 0,5—5 Gew.-%, vorzugsweise 1—3 Gew.-% eines anionischen Dispergiermittels, ausgewählt aus

a) Dialkylsulfosuccinaten, deren Alkylgruppen je 3—8 Kohlenstoffatome aufweisen, oder
b) sulfatierten oder sulfonierten Fettsäuren oder Fettsäureestern von Fettsäuren mit 10 bis 22 Kohlenstoffatomen,

sowie gegebenenfalls weitere Zusätze enthalten.

6. Farbstoffpräparate gemäß Anspruch 5, dadurch gekennzeichnet, daß sie als anionisches Dispergiermittel 0,5—5 Gew.-%, vorzugsweise 1—3 Gew.-% eines Dialkylsulfosuccinats enthalten, dessen Alkylgruppen je 3—8 Kohlenstoffatome aufweisen.

7. Farbstoffpräparate gemäß Ansprüchen 1—6, dadurch gekennzeichnet, daß sie als weitere Zusätze Coupagemittel, hydrotrope Mittel, Antimicrobica, Fungicide, Antischaummittel oder viskositätsverbessernde Mittel enthalten.

8. Verfahren zur Herstellung der wäßrigen Farbstoffpräparate gemäß den Ansprüchen 1 bis 7, dadurch gekennzeichnet, daß man den definitionsgemäßen Farbstoff in Wasser unter Zusatz von mindestens einem Dispergiermittel vermischt und vermahlt und die restlichen Komponenten vor, während oder nach dem Mahlprozeß zugibt.

9. Verwendung der Farbstoffpräparate gemäß Ansprüchen 1 bis 7 zur Herstellung von wäßrigen oder wäßrig-organischen Färbeflotten oder Drucktinten oder solchen auf Basis einer Wasser-in-Öl Emulsion oder zur Herstellung von Druckpasten enthaltend natürliche oder synthetische Verdicker.

10. Verwendung der Färbeflotten gemäß Anspruch 9 zum Färben von Textilmaterial.

11. Verwendung der Drucktinten gemäß Anspruch 9, welche transferierbare Farbstoffe enthalten, zum Bedrucken von flächenförmigen Gebilden nach dem Transferdruckprinzip.

12. Verwendung der Druckpasten gemäß Anspruch 9 zum Bedrucken von Textilmaterial, insbesondere Polyestergewebe.

## Claims

1. A liquid dyestuff or fluorescent whitener preparation comprising water, a water-insoluble or sparingly water-soluble dye or fluorescent whitener, a dispersant, a humectant, and optionally further additives, wherein said humectant is a compound of the formula I

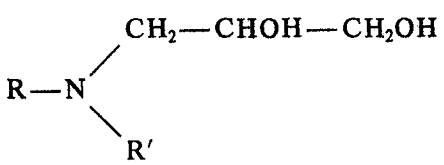

(I)

wherein R is a $C_1-C_{16}$ alkyl group which is unsubstituted or substituted by OH, CN, halogen or

$-N(C_1-C_4\ alkyl)_2$, and R′ is hydrogen or the

$-CH_2-CHOH-CH_2OH$ group.

2. A dyestuff preparation according to claim 1, wherein the humectant is a compound of the formula I in which R is an unsubstituted alkyl group of 1 to 8, preferably 2 to 4, carbon atoms, and in which R′ is the

$-CH_2-CHOH-CH_2OH$ group.

3. A dyestuff preparation according to claim 1, which comprises 15 to 60% by weight of dye, 20 to 60% by weight of water, 10 to 50% by weight of humectant of the formula I, 0.5 to 10% by weight of dispersant and 0 to 20% by weight of further additives.

4. A dyestuff preparation according to claim 3, which comprises 15 to 60% by weight, preferably 35 to 50% by weight, of dye, 20 to 60% by weight of water, 10 to 50% by weight, preferably 15 to 30% by weight, of the humectant of formula I, 0.1 to 5% by weight of an anionic dispersant, 0.5 to 5% by weight of a non-ionic copolymer of ethylene oxide and a further olefin oxide containing at least 65% by weight of ethylene oxide and having a molecular weight of more than 12 000, and optionally further additives.

5. A dyestuff preparation according to claim 3, which comprises 15 to 60% by weight, preferably 35 to 50% by weight, of dye, 20 to 60% by weight of water, 10 to 50% by weight, preferably 15 to 30% by weight, of the humectant of formula I, 0.5 to 5% by weight, preferably 1 to 4% by weight, of a non-ionic dispersant, and 0.5 to 5% by weight, preferably 1 to 3% by weight, of an anionic dispersant selected from the group consisting of the

a) dialkylsulfosuccinates, the alkyl moieties of which each contain 3 to 8 carbon atoms, or of the
b) sulfated or sulfonated fatty acids or fatty acid esters of fatty acids containing 10 to 22 carbon atoms,

and optionally further additives.

6. A dyestuff preparation according to claim 5, which contains, as anionic dispersant, 0.5 to 5% by weight, preferably 1 to 3% by weight, of a dialkylsulfosuccinate, the alkyl moieties of which each contain 3 to 8 carbon atoms.

7. A dyestuff preparation according to any one of claims 1 to 6, which contains, as further additives, an extender, a hydrotropic agent, a microbicide, a fungicide, an antifoam or a viscosity improver.

8. A process for the production of an aqueous preparation as claimed in any one of claims 1 to 7, which process comprises mixing and grinding the dye in water with the addition of at least one dispersant, and adding the remaining components before, during or after the grinding operation.

9. Use of a dyestuff preparation according to any one of claims 1 to 7 for obtaining aqueous or aqueous-organic dye liquors or printing inks or those based on a water-in-oil emulsion, or for obtaining printing pastes containing natural or synthetic thickeners.

10. Use of a dye liquor according to claim 9 for dyeing textile material.

11. Use of a printing ink according to claim 9, containing transfer dyes for printing planar structures by the transfer printing process.

12. Use of a printing paste according to claim 9 for printing textile material, especially polyester material.

**Revendications**

1. Préparations liquides de colorants ou d'azurants optiques contenant de l'eau, un colorant on un azurant optique insoluble ou peu soluble dans l'eau, un agent dispersant, un agent maintenant l'humidité ainsi qu'éventuellement d'autres additifs, caractérisées par le fait qu'elles contiennent comme agent maintenant l'humidité un composé de formule (I):

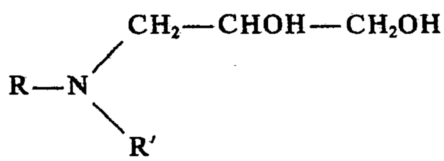

(I)

dans laquelle R est un groupe alkyle ayant 1 à 16 atomes de carbone, éventuellement substitué par OH, CN, un atome d'halogène ou $-N(alkyl-C_1-C_4)_2$ et R′ est un atome d'hydrogène ou le groupe

$-CH_2-CHOH-CH_2OH$.

2. Préparations tinctoriales selon la revendication 1, caractérisées par lefait qu'elles contiennent comme agent maintenant l'humidité un composé de formule (I) dans laquelle R est un groupe alkyle non substitué ayant 1 à 8, de préférence 2 à 4 atomes de carbone, et R' représente le groupe

$$-CH_2-CHOH-CH_2-OH.$$

3.Préparations tinctoriales selon la revendication 1, caractérisées par le fait qu'elles sont constituées par:

| | |
|---|---|
| 15 à 60% | en poids de colorant, |
| 20 à 60% | en poids d'eau, |
| 10 à 50% | en poids de l'agent maintenant l'humidité selon la définition, |
| 0,5 à 10% | en poids d'agent dispersant, et |
| 0 à 20% | en poids d'autres additifs. |

4. Préparations tinctoriales selon la revendication 3, caractérisées par le fait qu'elles contiennent en poids 15 à 60%, de préférence 35 à 50%, de colorant, 20 à 60% d'eau, 10 à 50%, de préférence 15 à 30%, de l'agent maintenant l'humidité conforme à la définition, 0,1 à 5% d'un dispersant anionique, 0,5 à 5% d'un copolymère non ionogène d'oxyde d'éthylène avec un autre oxyde d'oléfine ayant au moins 65% en poids de la fraction oxyde d'éthylène et un poids moléculaire supérieur à 12 000 et éventuellement d'autres additifs.

5. Préparations tinctoriales selon la revendication 3, caractérisées par le fait qu'elles contiennent en poids 15 à 60%, de préférence 35 à 50%, de colorant, 20 à 60% d'eau, 10 à 50%, de préférence 15 à 30%, de l'agent maintenant l'humidité conforme à la définition, 0,5 à 5%, de préférence 1 à 4%, d'un dispersant non-ionique et 0,5 à 5%, de préférence 1 à 3%, d'un dispersant anionique, choisi parmi:

a) des dialkylsulfosuccinates dont les groupes alkyle présentent chacun 3 à 8 atomes de carbone, ou
b) des acides gras ou des esters d'acides gras dont la partie acides gras a 10 à 22 atomes de carbone, sulfatés ou sulfonés,

et éventuellement d'autres additifs.

6. Préparations tinctoriales selon la revendication 5, caractérisées par le fait qu'elles contiennent comme dispersants anioniques 0,5 à 5% en poids, de préférence 1 à 3% en poids, d'un dialkylsulfosuccinate dont les groupes alkyle présentent chacun 3 à 8 atomes de carbone.

7. Préparations tinctoriales selon les revendications 1 à 6, caractérisées par le fait qu'elles contiennent comme autres additifs des agents de coupage, des agents hydrotropes, des produits antimicrobiens, fongicides, antimousses ou des agents améliorant la viscosité.

8. Procédé pour la fabrication des préparations tinctoriales aqueuses selon les revendications 1 à 7, caractérisé par le fait qu'on mélange et qu'on broie le colorant conforme à la définition dans l'eau tout en ajoutant au moins un agent dispersant et qu'on ajoute le reste des constituants avant, pendant ou après le processus de broyage.

9. Utilisation des préparations tinctoriales selon les revendications 1 à 7, pour la préparation de bains de teinture ou de couleurs d'impression aqueux ou hydro-organiques ou bien de celles à base d'une émulsion eau-dans-l'huile ou bien pour la préparation de pâtes d'impression contenant des épaississants naturels synthétiques.

10. Utilisation des bains tinctoriaux selon la revendication 9, pour teindre des matières textiles.

11. Utilisation des couleurs d'impression selon la revendication 9, qui contiennent des colorants transférables pour imprimer des articles plats selon le principe de l'impression par transfert.

12. Utilisation des pâtes d'impression selon la revendication 9, pour imprimer des matières textiles, en particulier des tissus de polyester.